Europäisches Patentamt

(19) European Patent Office

Office européen des brevets

(11) Publication number: **0 044 731**

**A2**

(12) **EUROPEAN PATENT APPLICATION**

(21) Application number: **81303299.2**

(22) Date of filing: **17.07.81**

(51) Int. Cl.³: **G 01 G 11/00**

(30) Priority: **18.07.80 GB 8023652**

(43) Date of publication of application:
**27.01.82 Bulletin 82/4**

(84) Designated Contracting States:
**BE DE FR GB IT NL SE**

(71) Applicant: **PROCESS COMPUTING LIMITED**
**Syon Lane**
**Isleworth Middlesex, TW7 5NN(GB)**

(72) Inventor: **Hope, Victor Elijah**
**30 Hayes Way**
**Beckenham Kent(GB)**

(72) Inventor: **Cockcroft, Philip Howard**
**168 Penrose Avenue Carpenters Park**
**Watford Hertfordshire(GB)**

(74) Representative: **Oliver, Roy Edward et al,**
**POLLAK,MERCER & TENCH High Holborn House 52-54**
**High Holborn**
**London WC1V 6RY(GB)**

(54) **Conveyor weighing assembly and associated method.**

(57) Conveyor weighing assembly and associated method for weighing individually articles being transported by a conveyor, wherein an article (9) to be weighed is moved from an upstream portion (7) of the conveyor on to a weigh head (1) by the action of the upstream conveyor portion (7) on the article (9), the article is weighed whilst it is stationary on the weigh head (1), and is then moved on to a downstream portion (8) of the conveyor, as a consequence of the action on the weighed article (9) of the following article (9') as it is received on the weigh head (1) from the upstream conveyor portion (7). The weigh head preferably is provided with a weigh cell (6) and associated microprocessor means for providing a signal representative of the weight of the stationary article upon the weigh head. The microprocessor means can be programmed to scan the signal and to determine the minimum gradient thereof, thereby providing the most accurate weight reading. Alternatively, the microprocessor means can be programmed to predict by extrapolation the minimum gradient of the signal. Also, the programmed microprocessor means can be used to sense the presence of an article to be weighed upon the weigh head. In a preferred embodiment of the assembly, the downstream conveyor portion (8) is located at a lower level than that of the upstream portion (7), with the weigh head (1) located at an intermediate level between the two conveyor portions (7,8).

FIG.1.

CONVEYOR WEIGHING ASSEMBLY AND ASSOCIATED METHOD

DESCRIPTION

This invention relates to a conveyor weighing assembly and associated method for weighing individually articles which are being transported by a conveyor and which need to be weighed whilst they are being transported on the conveyor from, say, a production line to a packaging station.

Known forms of in-line conveyor weighing devices and assemblies comprise a weigh head and associated apparatus for transferring an article to be weighed from the conveyor or from an upstream portion thereof on to the weigh head and/or from the weigh head back to the conveyor or on to a downstream conveyor portion. A major disadvantage of these known forms of conveyor weighing assembly resides in the substantial amount of associated apparatus which is required to transfer the article to be weighed to the weigh head and, subsequently, the weighed article from the weigh head.

An object of the present invention is to provide a weighing assembly which can be incorporated into a conveyor system and which eliminates the disadvantages associated with known devices of this type.

In accordance with one aspect of the invention, there is provided an assembly for weighing . individually articles being transported by a conveyor, the assembly comprising an upstream conveyor portion, a downstream conveyor portion and a weigh head which is arranged to receive from the upstream conveyor portion an article to be weighed, which is arranged to weigh the article when it has been received from the upstream conveyor portion, whilst the article is stationary on the weigh head, and which allows the weighed article to be moved on to the downstream conveyor portion as a consequence of the action on the weighed stationary article of the following article being received on the weigh head from the upstream conveyor portion.

Also, in accordance with a second aspect of the invention, there is provided a method of weighing an article being transported by a conveyor, which method comprises causing the article to move from an upstream portion of the conveyor on to a weigh head by the action of the upstream conveyor portion on the article, weighing the article whilst it is stationary on the weigh head, and causing the weighed stationary article to be moved on to a downstream portion of the conveyor, as a consequence of the action on the weighed article of the following article as it is received on the weigh head from the upstream portion of the conveyor.

The weigh head, and any associated weighing apparatus and/or electronic circuitry, is physically separated from the two conveyor portions. The article to be weighed can be moved on to the weigh head by the momentum acquired by its movement along the upstream conveyor portion, as it leaves the end thereof, by the pushing action of the following article on the upstream conveyor portion, by the pushing action of the upstream conveyor portion, or by any combination thereof.

Preferably, the downstream conveyor portion is at a lower level than that of the upstream conveyor portion, with the weigh head located at an intermediate level between the two conveyor portions. In this particular arrangement, the movement of the weighed article from the weigh head may be assisted by the engagement of the leading end of the article with the downstream conveyor portion, whereby the weighed article is finally dragged or drawn from the weigh head by the movement of the downstream conveyor portion. Alternatively, and depending upon the weight of the articles, the impact of the following article as it moves from the upstream conveyor portion on to the weigh head is sufficient to propel the weighed article from the weigh head to the downstream conveyor portion, without any assistance from the latter by the previously-described dragging or drawing action.

It should be noted that no manual and/or additional mechanical operation is required, in order to transfer the article to and from, and to weigh the article whilst it is stationary upon, the weigh head, the movement of the article on to and from the weigh head being an intrinsic feature of the arrangement of the weigh head with respect to the two conveyor portions. Additionally, in the preferred embodiments of weighing assembly the actual movement of the weigh head during the weighing operation is minimal, whereby the weigh head does not have to be returned to an initial predetermined position with respect to the downstream conveyor portion, before the weighed article can be transferred thereto.

Advantageously, the weigh head is associated with a weigh cell which is connected to a microprocessor for providing a signal and/or indication of the weight of the article upon the weigh head. Successive weight signals can then be used to provide a continuous read-out of the individual and/or average weight of the articles which have been weighed.

Preferably, the microprocessor is programmed to scan a signal representative of the vertical movement of or loading upon the weigh head during each weighing operation, and to determine that portion of the signal having the smallest gradient on a displacement or loading versus time basis. Alternatively, the microprocessor can be programmed to predict such a minimum gradient by extrapolation. The minimum gradient portion of the signal provides the most accurate weight reading.

Also, the microprocessor can be programmed to sense from the signal the presence of the following article, without the need for any sensing means, such as a photocell or microswitch, associated with the weigh head.

In order that the invention may be more fully understood, three preferred embodiments of conveyor assembly in accordance therewith will now be described by way of example and with reference to the accompanying drawings in which:

Fig. 1 is a side view, in elevation, of a first assembly with a weighing head located between upstream and downstream portions of a main conveyor transporting packets of biscuits from a production line to a packaging station;

Fig. 2 is a side view, in elevation of a modified form of weigh head similar to that shown in the assembly of Fig. 1;

Fig. 3 is a diagrammatic side view of the assembly shown in Fig. 1, together with associated electronic circuitry and a read-out facility in block diagrammatic form;

Fig. 4 is a diagrammatic side view of the assembly shown in Fig. 2, again with associated electronic circuitry and a read-out facility shown in block diagrammatic form;

Fig. 5 is a diagrammatic side view of a third · embodiment of weighing assembly associated with the output end of a biscuit oven; and

Fig. 6 is a graph read-out of the movement of the weigh heads of the assemblies shown in Figs. 1 and 3 and 2 and 4 versus time.

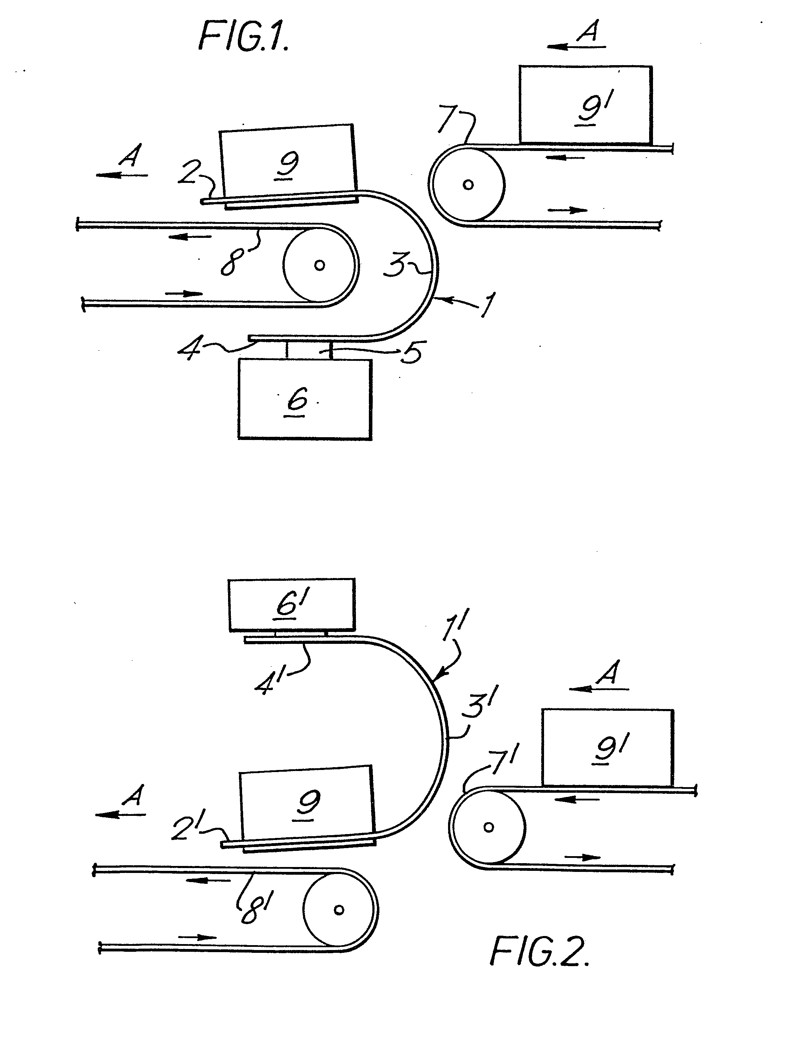

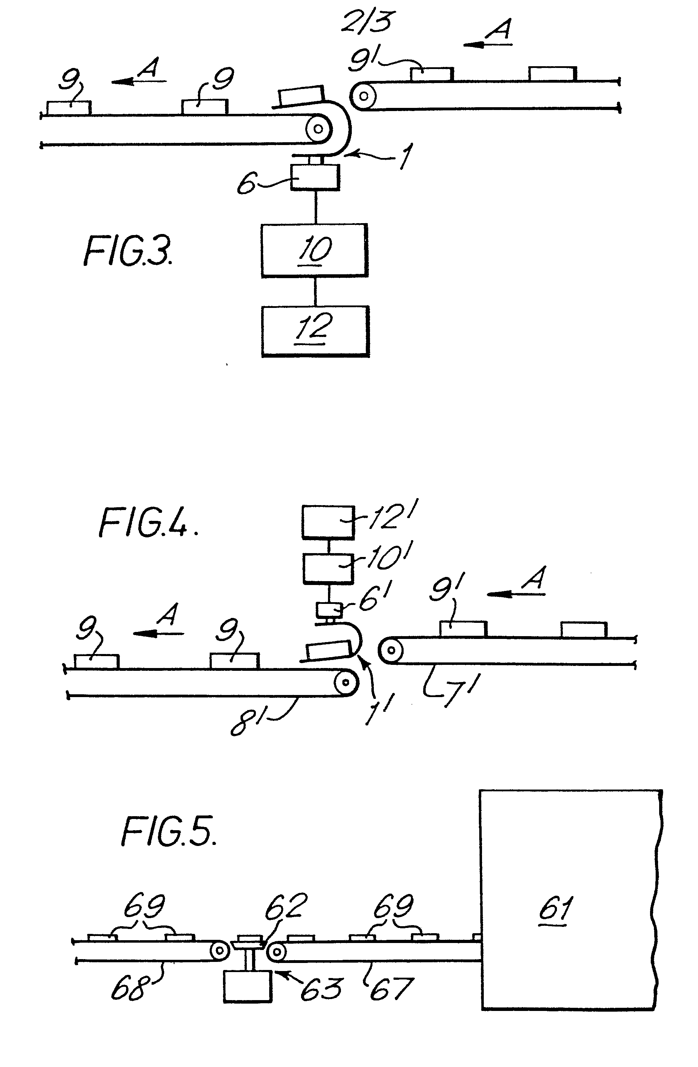

Referring firstly to Figs. 1 and 3, a conveyor weighing assembly comprises a weigh head 1 having an upper cradle portion 2, an intermediate arcuate portion 3 and a lower portion 4 connected, via a vertically movable member 5, to a weigh cell 6. The arcuate portion 3 of the weigh head is located between an upstream conveyor portion 7 and a downstream conveyor portion 8 of a main conveyor for transporting spaced packets of biscuits 9, in the direction of the arrows A, from a production line (not shown) to a packaging station (not shown), where the biscuit packets are boxed for subsequent storage and/or distribution.

Referring in particular to Fig. 3, the weigh cell 6 is connected to a microprocessor 10 which has a read-out facility 12.

The upstream conveyor portion 7 is at a higher level than the downstream conveyor portion 8, whilst the cradle portion 2 of the weigh head is located at an intermediate level therebetween.

In operation of the assembly shown in Figs. 1 and 3, a biscuit packet 9 is weighed in a stationary position upon the cradle portion 2 of the weigh head 1. The weight of the packet 9 is sensed by the weigh cell 6 which then feeds an appropriate signal to the microprocessor 10 which converts the signal into a corresponding packet weight signal for storage and/or further processing. Whilst this weighing operation is being carried out, the following biscuit packet 9' is being transported by the upstream conveyor portion 7 towards the weigh head 1. As the leading end of the packet 9' leaves the conveyor portion 7, the packet 9' tilts downwardly, whereby the lower edge of its leading end drops on to the upstream end of the cradle portion 2. However, at this point, the packet 9' is still in engagement with the conveyor portion 7, such that the packet 9' is pushed on to the cradle portion 2 and its leading end engages with the trailing end of the weighed packet 9. The further pushing action of the upstream conveyor portion 7 upon the packet 9' causes the latter to push the weighed packet 9 off the leading end of the cradle portion 2, such that the lower edge of the leading end of the packet 9 drops on to the downstream conveyor portion 8. As a consequence, the conveyor portion 8 then drags or draws the weighed packet 9 from the cradle portion 2 of the weigh head, whilst the following packet 9' now becomes located in a stationary position upon the cradle portion 2, at which point its weight is sensed by the weigh cell 6. This weighing operation is repeated for successive packets of biscuits following the packet 9'. The output signal representative of the weight of each weighed packet may be fed from the microprocessor 10 to the read-out facility 12 to provide an immediate visual indication of the weight of each packet and/or may undergo further processing to provide a continuous read-out of such parameters as the precentage variation in the weight of each package, a continuous averaging of the packet weights, and/or a standard deviation reading.

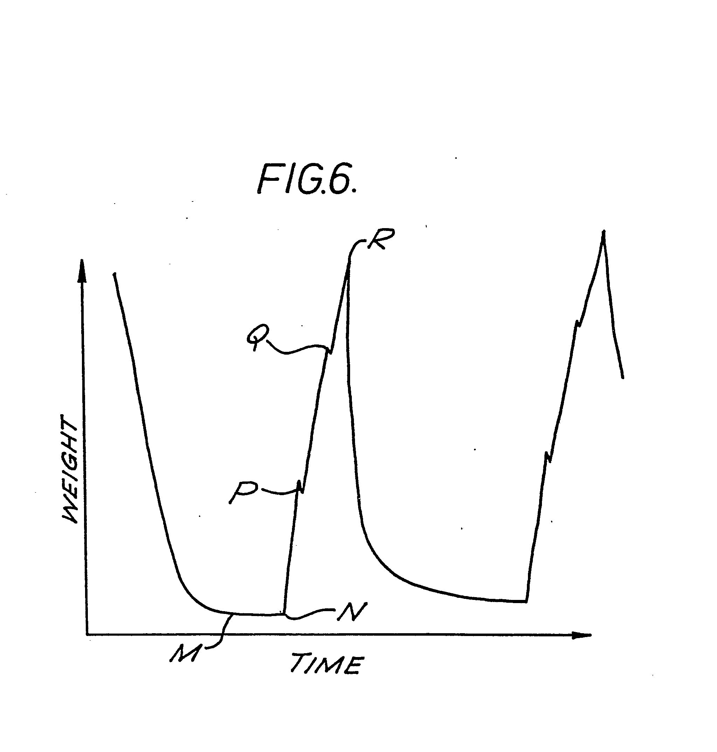

Referring now to Figs. 2 and 4, a weigh head 1' is suspended from a weigh cell 6' and has a lower cradle portion 2', an intermediate portion 3' and an upper portion 4'. This latter portion 4' is connected to the weigh cell 6' and the intermediate portion 3' is located between the upstream conveyor portion 7' and downstream conveyor portion 8' of the main conveyor transporting packets of biscuits 9, in the direction of the arrows A.

As will be appreciated, the operation of the weigh head 1' and its associated weigh cell 6' and microprocessor 10' is identical to that of the corresponding components described with reference to Figs. 1 and 3, except that, in this case, the weigh head 1' is suspended from above by the weigh cell 6'.

Referring now to Fig. 6, there is shown a portion of a curve of a graph read-out of the output signal from either weigh cell 6, 6' representing the vertical movement of the weigh head with respect to time. The minimum, substantially horizontal portion M of each period of the curve represents the majority of the time during which a packet is stationary upon the weigh head 1, 1' during the actual weighing operation. The point N or the curve is the instant at which the lower edge of the leading end of the following packet 9' drops on to the cradle portion 2, 2' of the weigh head 1, 1'. The subsidiary peak portion P on the curve is the point at which the leading end of the following packet 9' engages the trailing end of the weighed packet 9. The other subsidiary peak portion Q on the curve is the instant at which the lower edge of the leading end of the weighed packet 9 just engages with the downstream conveyor portion 8, 8' and the maximum point R of the curve represents the weighed packet 9 dropping from the cradle portion 2, 2' of the weigh head 1, 1', such that it is completely supported by the downstream conveyor portion 8, 8', whilst the following packet 9' is now located in a stationary position on the cradle portion. The steeply negative dradient portion of the curve, between the point R and the portion M, represents the response time associated with the downward movement of the weigh head 1, 1'.

The microprocessor 10, 10' is programmed to scan continuously the output signal, represented by the curve shown in Fig. 6, to determine the minimum numerical gradient which occurs along the portion M of the curve. In this way, an extremely accurate measurement of the weight of the packet 9 upon the weigh head is obtained, although the output signal from the microprocessor 10, 10' and, as a consequence, any visual read-out at facility 12, 12', lags the weighing process by one article.

However, it will be appreciated that this is not considered to be a disadvantageous feature of the electronic circuitry, in that the more important parameters such as those listed above, can be provided as a continuous read-out.

Alternatively, the microprocessor 10, 10' can be programmed to predict the minimum gradient along the curve portion M by extrapolation.

If necessary, a feedback signal from the microprocessor 10, 10' to a filling or other processing station upstream of the weigh head 1, 1' can be used to vary the contents of the individual biscuits or the packets of biscuits, in dependence upon one or more of the variation parameters of the weighed packets being outside a predetermined pair of upper and lower weight limits.

Furthermore, the microprocessor 10, 10' may be programmed to sense the presence of the next article to be weighed upon the weigh head 1, 1' by detecting, say, a sudden change of gradient in the signal curve. For instance, the programmed microprocessor could detect the change of polarity in the gradient of the curve on either side of the point R, as shown in Fig.6, and the subsequent change of gradient polarity at the succeeding point R, whereby the microprocessor scans that portion of the curve between the points R and R' to determine the minimum gradient on the curve portion M.

If necessary, a feedback signal from the microprocessor 10, 10' to a filling or other processing station upstream of the weigh head 1, 1' can be used to vary the contents of the individual biscuits or the packets of biscuits, in dependence upon one or more of the variation parameters of the weighed packets being outside a predetermined pair or upper and lower weight limits.

Referring now to Fig. 5, spaced transverse rows of biscuits 69 emerge from a biscuit over 61 on an oven band 67. ، An output conveyor 68 subsequently transports the biscuits 69 to a sorting and/or packing station. Between the oven band 67 and conveyor 68 is usually located a dead plate for transfer of biscuits therebetween. In accordance with the invention, this normal deadplate is now used as the platform 62 of a weigh head 63.

Each transverse row of biscuits 69 is moved on to the platform 62 by the action of the oven band 67. The weighing operation is then carried out by the weigh head 63 and the following row of biscuits 69 then transfers the weighed biscuits on to the output conveyor 68 by a pushing action. It will be appreciated that a weigh platform 62 for each biscuits of a row of biscuits may be provided, whereby various parameters for the biscuits can be determined, as discussed above. Alternatively, a single platform 62 for each row of biscuits 69 may be used, in which case the measured weight corresponds to the or each row. The associated electronic circuitry, such as the weigh cell, microprocessor and read-out may be identical or very similar to that used with the assemblies described above with reference to Figs. 1 to 4. Additionally, the method of determining the most accurate weight of each biscuit or each biscuit row may be that described above with reference to Fig. 6, that is, using the minimum gradient on the displacement time curve.

Instead of using a weigh head which is vertically movable, a strain gauge arrangement could be used, whereby the curve representative of the output signal therefrom would be a loading/time curve, rather than the displacement/time curve associated with the movable weigh heads 1, 1' described above.

Thus, it can be seen that, apart from eliminating or at least substantially reducing the disadvantages associated with known forms of stationary conveyor weighing devices, the present invention also provides certain distinct advantages over the known devices, in that:

(a) it is of greatly simplified construction;

(b) it does not use as much energy as the previously known devices, in that it has no moving parts, except the weigh head;

(c)   it uses no moving parts whatsoever, if a strain gauge is employed instead of a vertically movable weigh head;

(d)   it requires hardly any maintenance;

(e)   it can be easily moved to different locations with respect to the main conveyor; and

(f)   its accuracy is increased by up to ten fold over the known devices, its accuracy being as high as $\pm$ 0.05%.

CLAIMS

1. A conveyor weighing assembly for weighing individually articles being transported by a conveyor, the assembly comprising an upstream conveyor portion, a downstream conveyor portion and a weigh head which is arranged to receive from the upstream conveyor portion an article to be weighed, which is arranged to weigh the article when it has been received from the upstream conveyor portion, whilst the article is stationary on the weigh head, and which is characterised in that it is arranged such that the weighed article is moved on to the downstream conveyor portion as a consequence of the action on the weighed stationary article of the following article being received on the weigh head from the upstream conveyor portion.

2. An assembly according to claim 1, characterised in that the downstream conveyor portion is at a lower level than that of the upstream conveyor portion, with the weigh head located at an intermediate level between the two conveyor portions.

3. An assembly according to claim 1 or 2, characterised in that the weigh head is vertically displaceable.

4. An assembly according to claim 1 or 2, characterised in that the weigh head comprises a strain gauge.

5. An assembly according to any preceding claim, characterised by a weigh cell which is connected to microprocessor means for providing a signal representative of the weight of the article upon the weigh head.

6. An assembly according to claim 5, characterised by means for indicating the weight of the successively weighed articles.

7. An assembly according to claim 5 or 6, characterised in that said microprocessor means is adap-

ted to scan the representative, article weight signal and to determine that portion of the signal having the smallest gradient on a displacement or loading versus time basis.

8. An assembly according to claim 5 or 6, characterised in that said microprocessor means is adapted to predict that portion of the representative, article weight signal having the smallest gradient on a displacement or loading versus time basis.

9. An assembly according to any of claims 5 to 8, characterised in that said microprocessor means is adapted to sense from the weight signal the presence of an article to be weighed upon the weigh head.

10. An assembly according to claim 9, characterised in that said microprocessor means is adapted to scan the weight signal between adjacent pairs of points thereof at which a sudden change in the gradient polarity occurs, and to determine the minimum gradient between said points.

11. An assembly according to any preceding claim, characterised in that the weigh head is physically separated from the conveyor portions.

12. A method of weighing individually articles being transported by a conveyor, which method comprises causing an article to move from an upstream portion of the conveyor on to a weigh head by the action of the upstream conveyor portion on the article and weighing the article whilst it is stationary on the weigh head, characterised in that the weighed stationary article is moved on to a downstream portion of the conveyor, as a consequence of the action on the weighed article of the following article as it is received on the weigh head from the upstream conveyor portion.

13. A method according to claim 12, characterised in that the article to be weighed is caused to move on to the weigh head by the momentum acquired by its movement along the upstream conveyor portion as it leaves the end thereof.

14. A method according to claim 12, characterised in that the article to be weighed is caused to move on to the weigh head by the pushing action of the following article on the upstream conveyor portion.

15. A method according to claim 12, characterised in that the article to be weighed is caused to move on to the weigh head by the pushing action of the upstream conveyor portion.

16. A method according to any of claims 12 to 15, characterised in that the movement of the weighed article from the weigh head is assisted by the engagement of the leading end of the article with the downstream conveyor portion.

17. A method according to any of claims 12 to 15, characterised in that the impact of the following article, moving from the upstream conveyor portion, with the weighed article on the weigh head, is sufficient to propel the weighed article on to the downstream conveyor portion.

18. A method according to any of claims 12 to 17, characterised in that the downstream conveyor portion is located at a lower level than that of the upstream conveyor portion, and the weigh head is located at an intermediate level between those of the two conveyor portions.

19. A method according to any of claims 12 to 18 characterised by providing a signal representative of the weight of the article upon the weigh head.

20. A method according to claim 19 characterised by providing from said signal an indication of the weight of the successively weighed articles.

21. A method according to claim 19 or 20 characterised by scanning said signal and determining that portion of the signal having the smallest gradient on a displacement or loading versus time basis.

22. A method according to claim 19 or 20 characterised by predicting by extrapolation that portion of said signal having the smallest gradient on a displacement or loading versus time basis.

23. A method according to any of claims 19 to 22 characterised by sensing from said signal the presence of an article to be weighed upon the weigh head.

24. A method according to claim 23 characterised by scanning said signal between adjacent pairs of points thereof, at which a sudden change in the gradient polarity occurs, and determining the minimum gradient between said points.

25. A method according to any of claims 12 to 24, characterised in that the weigh head is physically separated from the upstream and downstream conveyor portions.

FIG.1.

FIG.2.

FIG.3.

FIG.4.

FIG.5.

FIG.6.